# EUROPEAN PATENT APPLICATION

(11) **EP 4 636 390 A1**
(43) Date of publication of application: **22.10.2025**
(21) Application number: 23911904.3
(22) Date of filing: 20.12.2023
(51) Int. Cl.: G01N 21/65

(54) **SPECTROSCOPIC ANALYSIS DEVICE AND SPECTROSCOPIC ANALYSIS METHOD**

(30) Priority: 28.12.2022 JP 2022212367
(71) Applicant: HORIBA, Ltd., Minami-ku Kyoto-shi Kyoto 601-8510 (JP)
(72) Inventor: WAKABAYASHI, Satoru, Kyoto-shi, Kyoto 601-8510 (JP)
(74) Representative: Isarpatent
(86) International application number: PCT/JP2023/045769
(87) International publication number: WO 2024/143124

(57) **Abstract**

Provided are a spectroscopic analysis device and a spectroscopic analysis method capable of improving the accuracy of spectroscopic analysis by more accurately correcting a detection result.

A spectroscopic analysis device includes an image sensor that has a first region and a second region different from the first region, and that detects light incident on the first region and the second region; a first optical system that irradiates a sample with a primary light, and that causes a secondary light generated from the sample to be incident on the first region; a second optical system that causes a standard light to be incident on the second region; and an analysis unit that corrects a detection result of the secondary light incident on the first region, based on a detection result of the standard light incident on the second region.

## Description

### Technical Field

The present invention relates to a spectroscopic analysis device and a spectroscopic analysis method that irradiate a substance with a primary light and that analyzes a secondary light generated from the substance.

### Background Art

A substance is irradiated with a primary light, a secondary light generated from the substance is measured, and the substance is analyzed based on the spectrum of the secondary light. For example, Raman spectroscopic analysis or fluorescence spectroscopic analysis is performed. In order to acquire the spectrum of the secondary light, a method using a spectrometer and an image sensor may be used. The image sensor is, for example, a charge-coupled device (CCD) image sensor or a complementary metal-oxide-semiconductor (CMOS) image sensor that is a two-dimensional image sensor. The secondary light is spectrally separated by the spectrometer, travels in different directions for each wavelength (or wavenumber, and the same applies hereinafter), and is received at different positions on the image sensor for each wavelength. For example, the light receiving positions are aligned in a straight line on the image sensor in an x-axis direction. Since there is a correlation between the light receiving positions on the image sensor and the wavelengths, the spectrum of the secondary light can be obtained from the detection results of the image sensor.

A medical or biological sample may be analyzed, such as when components contained in a culture medium for culturing cells are analyzed in pharmaceutical development. In spectroscopic analysis such as Raman spectroscopic analysis, a shift occurs in the wavelength of light to be measured due to fluctuations in ambient environmental temperature. When a medical or biological sample is analyzed, the measurement period may extend over a long period such as several days to several weeks. When the measurement period is long, the influence of a shift in wavelength on the analysis result becomes large. Patent Literature 1 discloses a technique for correcting the wavelength of light in Raman spectroscopic analysis.

### Citation List

### Patent Literature:

Patent Literature 1: Japanese Patent No. 6291817

### Summary

### Technical Problems

In a conventional technique for correcting the wavelength of light in Raman spectroscopic analysis, a standard light is measured before and after Raman scattered light is measured, and the shift in the wavelength of light obtained during the measurement of the Raman scattered light is linearly approximated based on the wavelength of the standard light. Since there is no guarantee that the shift in wavelength changes linearly over time during the measurement of the Raman scattered light, the wavelength cannot be accurately corrected. For this reason, it is difficult to improve the accuracy of Raman spectroscopic analysis. In addition, when the measurement period is long, the accuracy of Raman spectroscopic analysis deteriorates further.

The present invention has been made in view of such circumstances, and an object of the present invention is to provide a spectroscopic analysis device and a spectroscopic analysis method capable of improving the accuracy of spectroscopic analysis by more accurately correcting a detection result.

### Solution to Problems

A spectroscopic analysis device according to one aspect of the present invention is characterized by comprising: an image sensor that has a first region and a second region different from the first region, and that detects light incident on the first region and the second region; a first optical system that irradiates a sample with a primary light, and that causes a secondary light generated from the sample to be incident on the first region; a second optical system that causes a standard light to be incident on the second region; and an analysis unit that corrects a detection result of the secondary light incident on the first region, based on a detection result of the standard light incident on the second region.

In an aspect of the present invention, the spectroscopic analysis device irradiates the sample with the primary light, causes the secondary light from the sample to be incident on the first region of the image sensor, causes the standard light to be incident on the second region of the image sensor, and detects the secondary light and the standard light. In addition, the spectroscopic analysis device corrects the detection result of the secondary light incident on the first region, based on the detection result of the standard light incident on the second region. Since the secondary light and the standard light are incident on different regions of the image sensor, the secondary light and the standard light can be easily distinguished and detected, and the detection result of the secondary light can be easily corrected based on the detection result of the standard light. A shift in the actual detection result of the secondary light at the time the secondary light is detected can be eliminated by performing correction based on the detection result of the standard light.

In the spectroscopic analysis device according to one aspect of the present invention, it is characterized in that the first optical system spectrally separates the secondary light, and causes the spectrally separated secondary light to be incident on the first region, the second optical system spectrally separates the standard light, and causes the spectrally separated standard light to be incident on the second region, the first region is configured such that a plurality of incident positions where a plurality of lights having different wavelengths are incident are aligned in a straight line, and the second region is disposed on the image sensor at a position shifted from a position of the first region in a direction intersecting a direction in which the plurality of incident positions are aligned.

In an aspect of the present invention, in the first region of the image sensor, the plurality of incident positions where a plurality of spectrally separated lights having different wavelengths are incident are aligned in a straight line. The second region is disposed at a position shifted from the position of the first region in the direction intersecting the direction in which the plurality of incident positions are aligned. No matter what wavelength the secondary light has, the incident positions of the secondary light are not included in the second region. For this reason, the secondary light and the standard light incident on the image sensor are easily distinguished.

The spectroscopic analysis device according to one aspect of the present invention is characterized by further comprising: a storage unit, wherein the storage unit stores a wavelength of the standard light in advance, and the analysis unit specifies a wavelength of the standard light incident on the second region, and corrects a wavelength of the secondary light incident on the first region, based on a shift between the specified wavelength of the standard light and the wavelength of the standard light stored in advance by the storage unit.

In an aspect of the present invention, the spectroscopic analysis device corrects the wavelength of the secondary light based on the shift in the wavelength of the standard light. A shift in the actual wavelength at the time the secondary light is detected can be eliminated by performing correction based on the detection result of the standard light. For this reason, the wavelength of the secondary light is accurately corrected.

The spectroscopic analysis device according to one aspect of the present invention is characterized by further comprising: a light source; and a light generation unit that generates the primary light and the standard light from light emitted by the light source.

In an aspect of the present invention, the spectroscopic analysis device generates the primary light and the standard light from the light emitted by the light source. A single light source can be used as the required light source.

In the spectroscopic analysis device according to one aspect of the present invention, it is characterized in that the first optical system and the second optical system share a spectrometer, the first optical system causes the secondary light to be incident on the spectrometer, the second optical system causes the standard light to be incident on a position different from a position where the secondary light is incident in the spectrometer, and the spectrometer spectrally separates the incident lights, and causes the spectrally separated lights to be incident on the image sensor.

In an aspect of the present invention, the spectroscopic analysis device spectrally separates the secondary light and causes the spectrally separated secondary light to be incident on the image sensor, and spectrally separates the standard light and causes the spectrally separated standard light to be incident on the image sensor, using the same spectrometer. The spectroscopic analysis device is miniaturized by sharing the spectrometer between the secondary light and the standard light.

In the spectroscopic analysis device according to one aspect of the present invention, it is characterized in that the second optical system includes a ring slit located on a path of the standard light before being incident on the spectrometer.

In an aspect of the present invention, the spectroscopic analysis device includes the ring slit on the path of the standard light before being incident on the spectrometer. The standard light that has passed through the ring slit is distributed in a ring shape, and when the standard light is incident on the same spectrometer, the standard light can be incident on a position different from the position where the secondary light is incident. The spectrally separated secondary light and the spectrally separated standard light incident on different positions of the spectrometer are incident on different regions of the image sensor.

In the spectroscopic analysis device according to one aspect of the present invention, it is characterized in that the secondary light includes Raman scattered light.

In an aspect of the present invention, the spectroscopic analysis device detects the secondary light including Raman scattered light. The Raman shift is corrected by correcting the wavelength of the secondary light. The spectroscopic analysis device can obtain an accurate Raman spectrum.

A spectroscopic analysis method according to one aspect of the present invention is characterized by comprising using an image sensor that has a first region and a second region different from the first region and that detects light incident on the first region and the second region; causing a secondary light, which is generated from a sample irradiated with a primary light, to be incident on the first region; causing a standard light to be incident on the second region; and correcting a detection result of the secondary light incident on the first region, based on a detection result of the standard light incident on the second region.

In an aspect of the present invention, the secondary light generated from the sample irradiated with the primary light is incident on the first region of the image sensor and detected. The standard light is incident on the second region of the image sensor and detected. The detection result of the secondary light incident on the first region is corrected based on the detection result of the standard light incident on the second region. The secondary light and the standard light are easily distinguished and correction is easily performed. A shift in the actual detection result of the secondary light at the time the secondary light is detected can be eliminated by performing correction based on the detection result of the standard light.

### Advantageous Effects of Invention

In the present invention, excellent effects such that he detection result of the secondary light can be accurately corrected and that the accuracy of spectroscopic analysis is improved.

### Brief Description of Drawings

FIG. 1 is a block diagram illustrating a configuration example of a spectroscopic analysis device according to Embodiment 1.
FIG. 2 is a schematic diagram illustrating a light receiving surface of an image sensor according to Embodiment 1.
FIG. 3 is a block diagram illustrating an example of an internal functional configuration of an analysis unit.
FIG. 4 is a schematic diagram illustrating the relationship between the reception of a spectrally separated secondary light and a spectrally separated standard light by the image sensor and both a Raman spectrum and a standard light spectrum.
FIG. 5 is a flowchart illustrating an example of the procedure of a process executed by the spectroscopic analysis device to correct the wavelength of light.
FIG. 6 is a block diagram illustrating a first configuration example of a spectroscopic analysis device according to Embodiment 2.
FIG. 7 is a schematic diagram illustrating a slit on which the secondary light and the standard light are incident.
FIG. 8 is a schematic diagram illustrating a light receiving surface of an image sensor according to Embodiment 2.
FIG. 9 is a block diagram illustrating a second configuration example of the spectroscopic analysis device according to Embodiment 2.
FIG. 10 is a block diagram illustrating a configuration example of a spectroscopic analysis device according to Embodiment 3.

### Description of Embodiments

Hereinafter, the present invention will be specifically described with reference to the drawings illustrating embodiments thereof.

### <Embodiment 1>

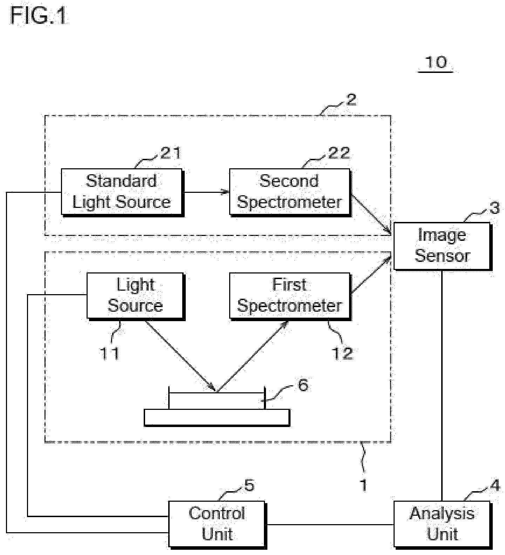

FIG. 1 is a block diagram illustrating a configuration example of a spectroscopic analysis device 10 according to Embodiment 1. The spectroscopic analysis device 10 executes a spectroscopic analysis method. The spectroscopic analysis device 10 is a Raman spectroscopic analysis device that irradiates a sample 6 with a primary light, measures Raman scattered light included in a secondary light generated from the sample 6, and performs Raman spectroscopic analysis. In FIG. 1, light is indicated by arrows. The spectroscopic analysis device 10 includes a first optical system 1, a second optical system 2, and an image sensor 3.

The first optical system 1 includes a light source 11 and a first spectrometer 12. The light source 11 emits monochromatic light. For example, the light source 11 is a laser light source. The light source 11 generates a primary light, and the sample 6 is irradiated with the primary light. The secondary light is generated from the liquid sample 6 in response to the irradiation of the liquid sample 6 with the primary light. The secondary light includes the Raman scattered light. The secondary light is incident on the first spectrometer 12. The first spectrometer 12 spectrally separates the incident secondary light, and emits the spectrally separated secondary light. The first optical system 1 includes optical components (not illustrated) such as a lens, a mirror, and a slit. The first optical system 1 is configured such that the primary light from the light source 11 is incident on the sample 6, the secondary light from the sample 6 is incident on the first spectrometer 12, and the secondary light spectrally separated by the first spectrometer 12 is incident on the image sensor 3.

The second optical system 2 includes a standard light source 21 and a second spectrometer 22. The standard light source 21 is a light source that emits a standard light, the wavelength (or wavenumber, and the same applies hereinafter) of which is known in advance. For example, the standard light source 21 is a laser light source. For example, the standard light source 21 is a light source that emits the standard light including an emission line having a predetermined wavelength. The standard light is incident on the second spectrometer 22. The second spectrometer 22 spectrally separates the incident standard light, and emits the spectrally separated standard light. The second optical system 2 includes optical components (not illustrated) such as a lens, a mirror, and a slit. The second optical system 2 is configured such that the standard light from the standard light source 21 is incident on the second spectrometer 22, and the standard light spectrally separated by the second spectrometer 22 is incident on the image sensor 3.

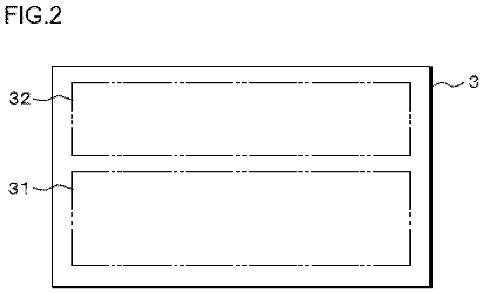

The image sensor 3 is, for example, a two-dimensional image sensor such as a (charge-coupled device) image sensor or a CMOS (complementary metal-oxide-semiconductor) image sensor. The image sensor 3 has a light receiving surface, light is incident on the light receiving surface and the image sensor 3 detects a received light intensity at each position within the light receiving surface. FIG. 2 is a schematic diagram illustrating the light receiving surface of the image sensor 3 according to Embodiment 1. The light receiving surface is formed in a two-dimensional planar shape. The image sensor 3 has a first region 31 and a second region 32 within the light receiving surface. The first region 31 is a region occupying a part of the light receiving surface. The second region 32 is a region located at a position different from that of the first region 31 within the light receiving surface. The secondary light spectrally separated by the first spectrometer 12 is incident on the first region 31, and the standard light spectrally separated by the second spectrometer 22 is incident on the second region 32. The secondary light spectrally separated by the first spectrometer 12 is not incident on the second region 32, and the standard light spectrally separated by the second spectrometer 22 is not incident on the first region 31. The first optical system 1 is configured such that the secondary light spectrally separated by the first spectrometer 12 is incident on the first region 31, and the second optical system 2 is configured such that the standard light spectrally separated by the second spectrometer 22 is incident on the second region 32.

The spectroscopic analysis device 10 further includes a control unit 5 and an analysis unit 4. The control unit 5 is composed of a computer including a computing unit that performs computations and a memory that stores data. The light source 11, the standard light source 21, and the analysis unit 4 are connected to the control unit 5. The control unit 5 controls the operation of each part of the spectroscopic analysis device 10. The image sensor 3 is connected to the analysis unit 4, and inputs data representing the detection result of light to the analysis unit 4.

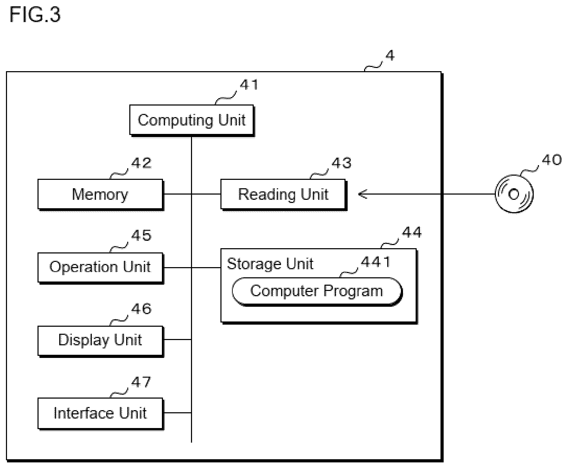

FIG. 3 is a block diagram illustrating an example of an internal functional configuration of the analysis unit 4. The analysis unit 4 is configured using a computer such as a personal computer. The analysis unit 4 includes a computing unit 41, a memory 42, a reading unit 43, a storage unit 44, an operation unit 45, a display unit 46, and an interface unit 47. The computing unit 41 is configured using, for example, a CPU (central processing unit), a GPU (graphics processing unit), or a multi-core CPU. The computing unit 41 may be configured using a quantum computer. The memory 42 is, for example, a RAM (random access memory). The storage unit 44 is non-volatile, and is, for example, a hard disk or a non-volatile semiconductor memory.

The reading unit 43 reads information from a recording medium 40 such as an optical disk or a portable memory. The operation unit 45 receives information such as text by receiving an operation from a user. The operation unit 45 is, for example, a keyboard, a pointing device, or a touch panel. The display unit 46 displays an image. The display unit 46 is, for example, a liquid crystal display or an EL display (electroluminescent display). The interface unit 47 is connected to the image sensor 3 and the control unit 5. The analysis unit 4 receives data, which is input from the image sensor 3, through the interface unit 47. In addition, the analysis unit 4 receives a control signal from the control unit 5 through the interface unit 47.

The computing unit 41 causes the reading unit 43 to read a computer program 441 recorded on the recording medium 40, and causes the storage unit 44 to store the read computer program 441. The computing unit 41 executes processes necessary for the analysis unit 4 according to the computer program 441. The computer program 441 may be a computer program product. Incidentally, the computer program 441 may be downloaded from outside the analysis unit 4. Alternatively, the computer program 441 may be stored in the storage unit 44 in advance. In these cases, the analysis unit 4 may not include the reading unit 43.

The computer program 441 may be deployed to be executed on a single computer or on a plurality of computers disposed at one site or distributed across a plurality of sites and interconnected by a communication network. The analysis unit 4 may be composed of a plurality of computers. The analysis unit 4 may be configured using a cloud.

The analysis unit 4 stores data representing the detection results from the image sensor 3 in the storage unit 44. The computing unit 41 executes a process to analyze the Raman scattered light, such as generating a Raman spectrum, based on the detection results from the image sensor 3. The display unit 46 displays the processing result. The control unit 5 and the analysis unit 4 may be integrated.

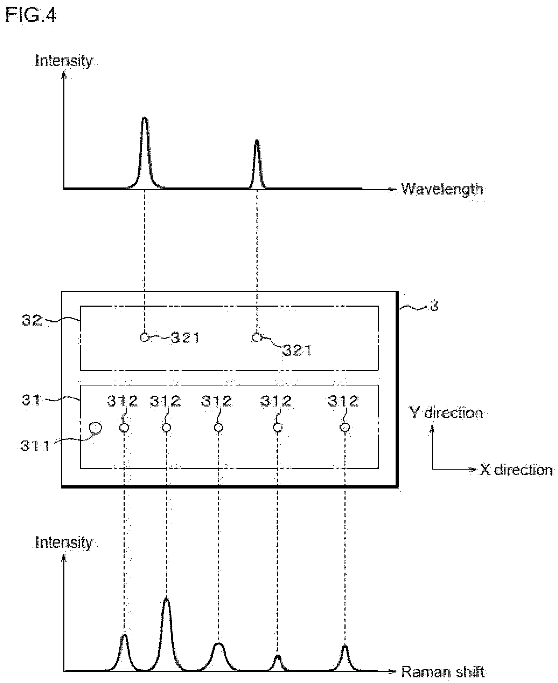

FIG. 4 is a schematic diagram illustrating the relationship between the reception of the spectrally separated secondary light and the spectrally separated standard light by the image sensor 3 and both a Raman spectrum and a standard light spectrum. FIG. 4 illustrates the standard light spectrum, the light receiving surface of the image sensor 3 on which the spectrally separated secondary light and the spectrally separated standard light are incident, and the Raman spectrum. The Raman scattered light is generated from the sample 6 by the irradiation of the sample 6 with the primary light, the secondary light including the Raman scattered light is spectrally separated by the first spectrometer 12, and the spectrally separated secondary light is incident on the first region 31 of the light receiving surface.

In the first region 31, light is incident on and received at an incident position 311 corresponding to the wavelength of the primary light. The Raman scattered light is light having a wavelength different from that of the primary light. The first spectrometer 12 emits the spectrally separated secondary light in different directions for each wavelength. For this reason, the spectrally separated secondary light is incident on and received at different positions in the first region 31 for each wavelength. Namely, the Raman scattered light having a wave height different from that of the primary light is incident on and received at the positions different from the incident position 311 in the first region 31. In FIG. 4, the incident positions of the Raman scattered light are indicated by 312. Typically, since a plurality of lights having different wavelengths are mixed in the Raman scattered light, a plurality of the incident positions 312 are generated.

The first optical system 1 is configured such that the plurality of incident positions 312 of light having different wavelengths and spectrally separated by the first spectrometer 12 are aligned in a straight line in the first region 31. In FIG. 4, a direction in which the plurality of incident positions 312 are aligned in a straight line is defined as an X direction, and a direction intersecting the X direction within the light receiving surface is defined as a Y direction. The second region 32 is disposed within the light receiving surface of the image sensor 3 at a position shifted from the position of the first region 31 in the direction (Y direction) intersecting the direction (X direction) in which the plurality of incident positions 312 are aligned. By disposing the second region 32 in this way, the incident positions 312 of the secondary light are not included in the second region 32 no matter what wavelength the secondary light has. Namely, the first region 31 where the secondary light is incident and the second region where the standard light is incident are different regions within the light receiving surface of the image sensor 3, and the image sensor 3 detects each of the secondary light and the standard light incident on different regions. For this reason, the spectroscopic analysis device 10 does not need to perform peak separation on the secondary light and the standard light, and can easily distinguish between the detection result of the secondary light and the detection result of the standard light.

The image sensor 3 detects a received light intensity at each position in the first region 31, and inputs data representing the detection result to the analysis unit 4. The data representing the detection result is data in which the intensity of the light received at each position is associated with each position in the first region 31. The analysis unit 4 specifies each of the incident positions 312 from the detection result, specifies a received light intensity at each of the incident positions 312, and generates a Raman spectrum from the incident positions 312 and the received light intensities. As illustrated in FIG. 4, the incident positions 312 correspond to the Raman shifts of peaks included in the Raman spectrum, and the received light intensities correspond to the intensities of the peaks included in the Raman spectrum. In this way, the analysis unit 4 generates the Raman spectrum for the sample 6 based on the detection results from the image sensor 3.

Similarly, the standard light is spectrally separated by the second spectrometer 22, and the spectrally separated standard light is incident on the second region 32 of the light receiving surface of the image sensor 3. The spectrally separated standard light is incident on and received at incident positions 321 corresponding to wavelengths in the second region 32. The image sensor 3 detects a received light intensity at each position in the second region 32, and inputs data representing the detection result to the analysis unit 4. The data representing the detection result is data in which the intensity of the light received at each position is associated with each position in the second region 32. The analysis unit 4 specifies each of the incident positions 321 from the detection result, specifies a received light intensity at each of the incident positions 321, and generates a standard light spectrum from the incident positions 321 and the received light intensities. As illustrated in FIG. 4, the incident positions 321 correspond to the wavelengths of peaks included in the standard light spectrum, and the received light intensities correspond to the intensities of the peaks included in the standard light spectrum. In this way, the analysis unit 4 generates the standard light spectrum based on the detection results from the image sensor 3.

The spectroscopic analysis device 10 causes the spectrally separated secondary light and the spectrally separated standard light to be incident on the image sensor 3 at the same time. The image sensor 3 detects the secondary light and the standard light incident at the same time. For this reason, the analysis unit 4 generates the spectra of the standard light and the Raman scattered light incident on the image sensor 3 at the same time.

In spectroscopic analysis, a shift occurs in the wavelength of light to be measured due to distortion of the optical system caused by fluctuations in ambient environmental temperature. For this reason, in response to the fluctuations in ambient environmental temperature, a shift occurs in the wavelength of the detected secondary light, and a shift occurs in the Raman shift, so that an accurate Raman spectrum cannot be obtained. Since the wavelength of the standard light is known in advance, a shift between the wavelength of the detected standard light and the known wavelength can be specified. The analysis unit 4 performs a process of specifying the shift between the wavelength of the detected standard light and the known wavelength, and correcting the wavelength of the detected secondary light depending on the specified shift in wavelength. In this way, the analysis unit 4 corrects the detection result of the secondary light incident on the first region 31, based on the detection result of the standard light incident on the second region 32.

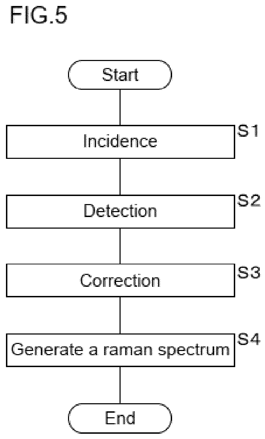

FIG. 5 is a flowchart illustrating an example of the procedure of a process executed by the spectroscopic analysis device 10 to correct the wavelength of light. Hereinafter, the step is abbreviated as S. The computing unit 41 of the analysis unit 4 executes the following processes according to the computer program 441. The spectroscopic analysis device 10 causes the spectrally separated secondary light to be incident on the image sensor 3 using the first optical system 1, and causes the spectrally separated standard light to be incident on the image sensor 3 using the second optical system 2 (S1). In S1, the control unit 5 causes the light source 11 to irradiate the sample 6 with the primary light, the secondary light generated from the sample 6 is incident on the first spectrometer 12, and the secondary light spectrally separated by the first spectrometer 12 is incident on the first region 31 of the image sensor 3. In addition, the control unit 5 causes the standard light source 21 to emit the standard light, the standard light is incident on the second spectrometer 22, and the standard light spectrally separated by the second spectrometer 22 is incident on the second region 32 of the image sensor 3.

The image sensor 3 detects the incident lights (S2). In S2, the image sensor 3 detects a received light intensity at each position in the first region 31, and inputs data representing the detection result to the analysis unit 4. In addition, the image sensor 3 detects a received light intensity at each position in the second region 32, and inputs data representing the detection result to the analysis unit 4. The analysis unit 4 receives the data representing the detection result through the interface unit 47, and stores the data in the storage unit 44.

The analysis unit 4 corrects the wavelength of the detected secondary light based on the detection result of the standard light (S3). In S3, the computing unit 41 specifies the incident positions 321 of the standard light based on the received light intensity at each position in the second region 32 that is represented by the data input from the image sensor 3, and specifies the wavelengths of the detected standard light based on the incident positions 321. For example, the computing unit 41 specifies the wavelengths of peaks included in the standard light spectrum. The storage unit 44 stores the true wavelength of the standard light in advance. The computing unit 41 specifies a shift between the wavelength of the detected standard light and the true wavelength of the standard light stored in advance by the storage unit 44.

For example, the wavelength of the detected light is x, the true wavelength is y, a and b are coefficients, and it is assumed that there is a relationship y = ax + b between the true wavelength y and the wavelength x of the detected light. It is assumed that the standard light spectrum includes a plurality of peaks. The computing unit 41 specifies the coefficients a and b through the least squares method using the true wavelength y of the standard light and the wavelength x of the detected standard light related to the plurality of peaks. In this way, the computing unit 41 specifies the shift between the wavelength of the detected standard light and the true wavelength of the standard light.

The computing unit 41 specifies the incident positions 311 and 312 of the secondary light based on the received light intensity at each position in the first region 31 that is represented by the data input from the image sensor 3, and specifies the wavelength of the detected secondary light based on the incident positions 311 and 312. The computing unit 41 calculates the wavelength of the detected secondary light based on the shift between the wavelength of the detected standard light and the true wavelength of the standard light. For example, the true wavelength y of the secondary light is calculated by calculating y = ax + b using the value of the wavelength x of the detected secondary light and the specified coefficients a and b. In this way, the analysis unit 4 corrects the wavelength of the secondary light. The analysis unit 4 corrects the Raman shift of the Raman scattered light included in the secondary light by correcting the wavelength of the secondary light.

The analysis unit 4 generates a Raman spectrum using the corrected Raman shift (S4). In S4, the Raman spectrum is generated by relating the corrected Raman shift to the received light intensity of the Raman scattered light corresponding to each Raman shift. The computing unit 41 stores data representing the generated Raman spectrum in the storage unit 44. After S4 has ended, the spectroscopic analysis device 10 ends the process of correcting the wavelength of light.

The spectroscopic analysis device 10 measures Raman scattered light from the sample 6 by repeatedly executing the processes of S1 to S4. For example, the spectroscopic analysis device 10 generates a Raman spectrum of the sample 6 by integrating Raman spectra generated each time the process of S1 to S4 are repeated. For example, the spectroscopic analysis device 10 displays the Raman spectrum of the sample 6 on the display unit 46. After the measurement of the Raman scattered light has ended, the spectroscopic analysis device 10 performs various analyses such as component analysis of the sample 6 based on the Raman spectrum of the sample 6.

As described above, the spectroscopic analysis device 10 irradiates the sample 6 with the primary light, spectrally separates the secondary light from the sample 6, causes the spectrally separated secondary light to be incident on the first region 31 of the image sensor 3, causes the spectrally separated standard light to be incident on the second region 32 of the image sensor 3, and detects the secondary light and the standard light. In addition, the spectroscopic analysis device 10 corrects the wavelength of the secondary light incident on the first region 31, based on the shift in the wavelength of the standard light incident on the second region 32. A shift occurs in the wavelength of the detected secondary light in response to fluctuations in ambient environmental temperature, and similarly, a shift also occurs in the wavelength of the detected standard light. Since the true wavelength of the standard light is stored in advance, the wavelength of the secondary light can be corrected based on the shift between the wavelength of the detected standard light and the true wavelength of the standard light.

Since the secondary light and the standard light are incident on different regions of the image sensor 3, there is no need to separate the secondary light and the standard light. The secondary light and the standard light can be easily distinguished and detected by detecting the light incident on the first region 31 and detecting the light incident on the second region 32. For this reason, the detection result of the secondary light can be easily corrected based on the detection result of the standard light.

Since the secondary light and the standard light are detected in parallel using the image sensor 3, the detected secondary light and the detected standard light are subjected to the same influence caused by fluctuations in ambient environmental temperature. A shift in the actual wavelength at the time the secondary light is detected can be eliminated by performing correction based on the detection result of the standard light. There is no need to linearly approximate the shift in the wavelength of the secondary light, so that the wavelength of the secondary light is accurately corrected, and the Raman shift is corrected. Therefore, the Raman shift becomes accurate, and an accurate Raman spectrum is obtained. The accuracy of Raman spectroscopic analysis is improved by using the accurate Raman spectrum. Particularly, even when the measurement period is long, such as when a medical or biological sample is analyzed, the wavelength of the secondary light is accurately corrected, and an accurate Raman spectrum is obtained, so that the accuracy of Raman spectroscopic analysis does not deteriorate.

### <Embodiment 2>

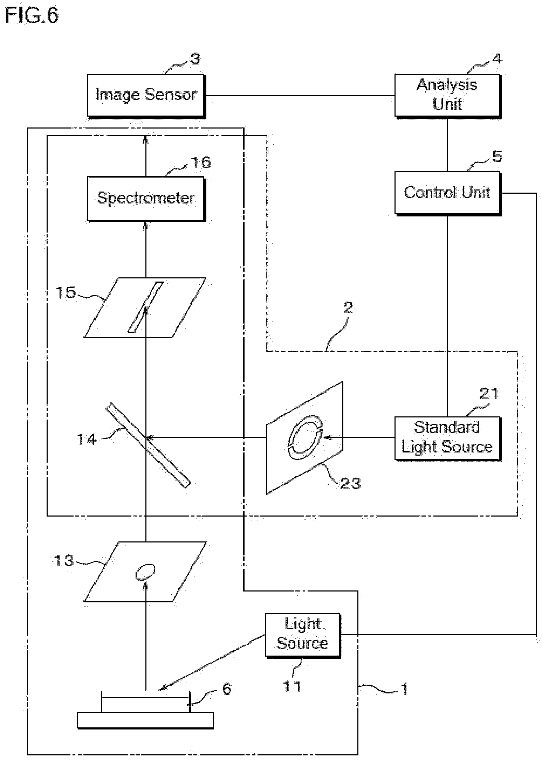

In Embodiment 2, a mode in which a spectrometer is shared between the first optical system 1 and the second optical system 2 is illustrated. FIG. 6 is a block diagram illustrating a first configuration example of the spectroscopic analysis device 10 according to Embodiment 2. The first optical system 1 includes the light source 11, a pinhole 13, a half mirror 14, a slit 15, and a spectrometer 16. The first optical system 1 is configured such that the sample 6 is irradiated with the primary light from the light source 11, and the secondary light generated from the sample 6 passes through the pinhole 13, the half mirror 14, and the slit 15 and is incident on the spectrometer 16. The first optical system 1 may include other optical components (not illustrated).

The second optical system 2 includes the standard light source 21 and a ring slit 23, and shares the half mirror 14, the slit 15, and the spectrometer 16 with the first optical system 1. The second optical system 2 is configured such that the standard light emitted from the standard light source 21 passes through the ring slit 23, the half mirror 14, and the slit 15 and is incident on the spectrometer 16. The second optical system 2 may include other optical components (not illustrated). The secondary light and the standard light are incident substantially coaxially on the slit 15.

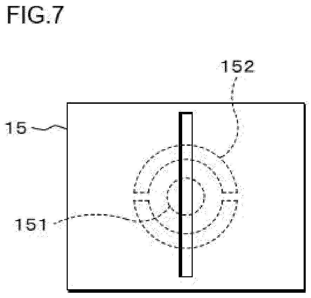

FIG. 7 is a schematic diagram illustrating the slit 15 on which the secondary light and the standard light are incident. Since the secondary light passes through the pinhole 13, a secondary light 151 incident on the slit 15 has a point shape. The ring slit 23 is located on the path of the standard light before being incident on the spectrometer 16, and a standard light 152 incident on the slit 15 has passed through the ring slit 23 and is distributed in a ring shape. The standard light 152 having a ring shape does not overlap the secondary light 151 having a point shape. For this reason, the secondary light and the standard light are incident on different positions of the slit 15, pass through the slit 15, and are incident on different positions of the spectrometer 16. The spectrometer 16 spectrally separates the secondary light and the standard light that are incident, and causes the spectrally separated secondary light and the spectrally separated standard light to be incident on the image sensor 3. In order to prevent the secondary light and the standard light from overlapping each other, an optical component other than the ring slit 23 may be used.

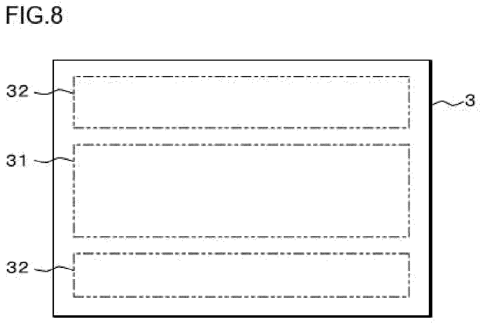

FIG. 8 is a schematic diagram illustrating the light receiving surface of the image sensor 3 according to Embodiment 2. The image sensor 3 has the first region 31 and two second regions 32 within the light receiving surface. The secondary light spectrally separated by the spectrometer 16 is incident on the first region 31. The second regions 32 are disposed within the light receiving surface at positions shifted from the position of the first region 31 in the direction intersecting the direction in which the incident positions of the secondary light in the first region 31 are aligned. The two second regions 32 are disposed at the positions interposing the first regions 31 therebetween. The spectrally separated secondary light and the spectrally separated standard light incident on different positions of the spectrometer 16 are incident on different regions of the image sensor 3. The second region 32 may be provided in one place instead of two places. The image sensor 3 is connected to the analysis unit 4. The analysis unit 4 and the control unit 5 are the same as those in Embodiment 1.

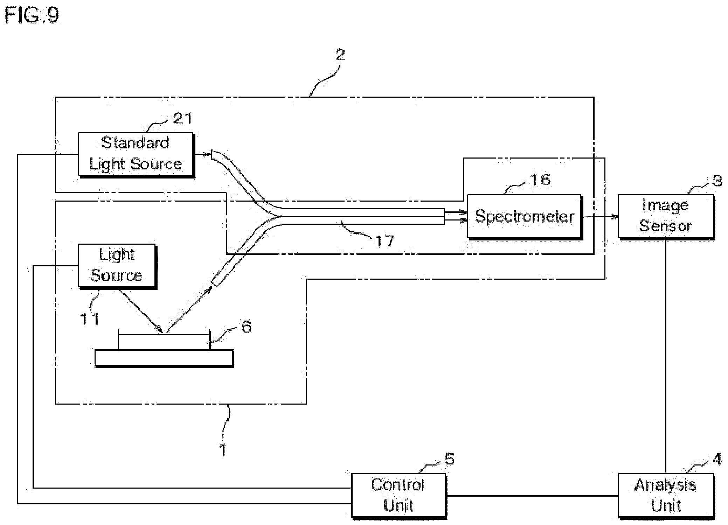

FIG. 9 is a block diagram illustrating a second configuration example of the spectroscopic analysis device 10 according to Embodiment 2. The first optical system 1 includes the light source 11, a bundle fiber 17, and the spectrometer 16. The bundle fiber 17 is configured by bundling a plurality of optical fibers. The first optical system 1 is configured such that the sample 6 is irradiated with the primary light from the light source 11, and the secondary light generated from the sample 6 is incident on one end of one optical fiber of the bundle fiber 17 and is incident on the spectrometer 16 from the other end of the optical fiber. The first optical system 1 may include other optical components (not illustrated).

The second optical system 2 includes the standard light source 21, and shares the bundle fiber 17 and the spectrometer 16 with the first optical system 1. The second optical system 2 is configured such that the standard light emitted from the standard light source 21 is incident on one end of another optical fiber of the bundle fiber 17 and is incident on the spectrometer 16 from the other end of the optical fiber. The second optical system 2 may include other optical components (not illustrated).

The secondary light and the standard light are emitted from the different optical fibers included in the bundle fiber 17, and are incident on different positions of the spectrometer 16. The spectrometer 16 spectrally separates the secondary light and the standard light that are incident, and causes the spectrally separated secondary light and the spectrally separated standard light to be incident on the image sensor 3. The secondary light is incident on the first region 31 of the light receiving surface of the image sensor 3, and the standard light is incident on the second regions 32 of the light receiving surface of the image sensor 3. The image sensor 3 is connected to the analysis unit 4. The analysis unit 4 and the control unit 5 are the same as those in Embodiment 1.

In Embodiment 2 as well, the image sensor 3 detects the secondary light incident on the first region 31, and detects the standard light incident on the second regions 32. The spectroscopic analysis device 10 corrects the wavelength of the secondary light incident on the first region 31, based on the shift in the wavelength of the standard light incident on the second regions 32. In Embodiment 2 as well, the spectroscopic analysis device 10 can eliminate a shift in the actual wavelength at the time the secondary light is detected by performing correction based on the detection result of the standard light. The wavelength of the secondary light is accurately corrected, and the Raman shift becomes accurate, so that an accurate Raman spectrum is obtained and the accuracy of Raman spectroscopic analysis is improved. In Embodiment 2, the spectroscopic analysis device 10 is miniaturized by sharing the spectrometer between the first optical system 1 and the second optical system 2.

### <Embodiment 3>

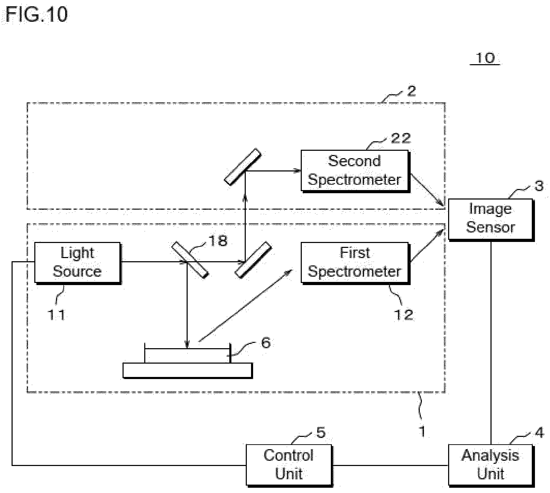

In Embodiment 3, a mode in which the primary light and the standard light are generated from one light source is illustrated. FIG. 10 is a block diagram illustrating a configuration example of the spectroscopic analysis device 10 according to Embodiment 3. The first optical system 1 includes the light source 11, a beam splitter 18, and the first spectrometer 12. The beam splitter 18 splits light emitted by the light source 11 into two lights. The sample 6 is irradiated with one light split by the beam splitter 18 and serving as the primary light. The first optical system 1 is configured such that the light from the light source 11 is split by the beam splitter 18, the sample 6 is irradiated with the primary light, the secondary light generated from the sample 6 is incident on the first spectrometer 12, and the secondary light spectrally separated by the first spectrometer 12 is incident on the first region 31 of the image sensor 3. The first optical system 1 may include other optical components (not illustrated).

The second optical system 2 includes the second spectrometer 22. The second optical system 2 is configured such that the other light split by the beam splitter 18 is incident on the second spectrometer 22 as the standard light, and the standard light spectrally separated by the second spectrometer 22 is incident on the second region 32 of the image sensor 3. The beam splitter 18 functions as a light generation unit that generates the primary light and the standard light from the light emitted by the light source 11. The second optical system 2 may include other optical components (not illustrated). The image sensor 3 is connected to the analysis unit 4. The analysis unit 4 and the control unit 5 are the same as those in Embodiment 1.

In Embodiment 3 as well, the image sensor 3 detects the secondary light incident on the first region 31, and detects the standard light incident on the second region 32. The spectroscopic analysis device 10 corrects the wavelength of the secondary light incident on the first region 31, based on the shift in the wavelength of the standard light incident on the second region 32. The spectroscopic analysis device 10 can accurately correct the detection result of the secondary light, so that an accurate Raman spectrum is obtained and the accuracy of Raman spectroscopic analysis is improved. In Embodiment 3, a single light source can be used as the required light source. Incidentally, similarly to Embodiment 2, the spectroscopic analysis device 10 may be configured in a mode in which the spectrometer is shared between the first optical system 1 and the second optical system 2.

In Embodiments 1 to 3, a mode in which the secondary light and the standard light are detected at the same time has been illustrated; however, the spectroscopic analysis device 10 may not detect the secondary light and the standard light completely at the same time as long as a mode in which the secondary light and the standard light are detected in parallel is implemented. For example, the spectrally separated secondary light and the spectrally separated standard light may be alternately incident on the image sensor 3, and the image sensor 3 may alternately detect the secondary light and the standard light. In this mode as well, the wavelength of the secondary light can be corrected to eliminate a shift in wavelength at the time the secondary light is detected, the wavelength of the secondary light is accurately corrected, and the Raman shift is corrected.

In Embodiments 1 to 3, a mode in which the fixed sample 6 is irradiated with the primary light has been illustrated; however, the spectroscopic analysis device 10 may be configured in a mode in which the sample 6 is scanned with the primary light by moving the sample 6 or moving the optical axis. In Embodiments 1 to 3, a mode in which light from the standard light source 21 or the light source 11 is used as the standard light has been illustrated; however, the spectroscopic analysis device 10 may be configured in a mode in which the standard light is obtained by other methods. For example, the spectroscopic analysis device 10 may be configured in a mode in which a standard sample is irradiated with light and light generated from the standard sample is used as the standard light.

In Embodiments 1 to 3, a mode in which only the wavelength of the secondary light is configured has been illustrated; however, the spectroscopic analysis device 10 may be configured in a mode in which the received light intensity of the secondary light is configured based on the received light intensity of the standard light. In Embodiments 1 to 3, a mode in which the wavelength of the secondary light is corrected and the Raman shift is corrected has been illustrated; however, the spectroscopic analysis device 10 may be configured in a mode in which the wavenumber or energy of the secondary light is corrected and the Raman shift is corrected. The spectroscopic analysis device 10 may be configured in a mode in which spectroscopic analysis other than Raman spectroscopic analysis is performed. For example, the spectroscopic analysis device 10 may be configured in a mode in which scattering spectroscopic analysis or fluorescence spectroscopic analysis is performed.

The present invention is not limited to the contents of the above-described embodiments, and various modifications can be made without departing from the scope of the claims. Namely, embodiments obtained by combining technical means appropriately modified within the scope of the claims are also included in the technical scope of the present invention.

The features set forth in each embodiment can be combined with each other. In addition, the independent claims and the dependent claims set forth in the claims can be combined with each other in any and all combinations, regardless of the citation format. Furthermore, the claims use a format in which a claim citing two or more other claims is set forth (multi-claim format); however, the present invention is not limited thereto. The claims may be set forth using a format in which a multi-claim (multi-multi claim) citing at least one a multi-claim is set forth.

### Reference Signs List

- 10: spectroscopic analysis device
- 1: first optical system
- 11: light source
- 12: first spectrometer
- 16: spectrometer
- 17: bundle fiber
- 18: beam splitter (light generation unit)
- 2: second optical system
- 21: standard light source
- 22: second spectrometer
- 23: ring slit
- 3: image sensor
- 31: first region
- 32: second region
- 4: analysis unit
- 40: recording medium
- 41: computing unit
- 44: storage unit
- 441: computer program
- 6: sample

## Claims

1. A spectroscopic analysis device, **characterized by** comprising:
an image sensor that has a first region and a second region different from the first region, and that detects light incident on the first region and the second region;
a first optical system that irradiates a sample with a primary light, and that causes a secondary light generated from the sample to be incident on the first region;
a second optical system that causes a standard light to be incident on the second region; and
an analysis unit that corrects a detection result of the secondary light incident on the first region, based on a detection result of the standard light incident on the second region.

2. The spectroscopic analysis device according to claim 1, **characterized in that**
the first optical system spectrally separates the secondary light, and causes the spectrally separated secondary light to be incident on the first region,
the second optical system spectrally separates the standard light, and causes the spectrally separated standard light to be incident on the second region,
the first region is configured such that a plurality of incident positions where a plurality of lights having different wavelengths are incident are aligned in a straight line, and
the second region is disposed on the image sensor at a position shifted from a position of the first region in a direction intersecting a direction in which the plurality of incident positions are aligned.

3. The spectroscopic analysis device according to claim 1 or 2, **characterized by** further comprising:
a storage unit,
wherein the storage unit stores a wavelength of the standard light in advance, and
the analysis unit specifies a wavelength of the standard light incident on the second region, and corrects a wavelength of the secondary light incident on the first region, based on a shift between the specified wavelength of the standard light and the wavelength of the standard light stored in advance by the storage unit.

4. The spectroscopic analysis device according to any one of claims 1 to 3, **characterized by** further comprising:
a light source; and
a light generation unit that generates the primary light and the standard light from light emitted by the light source.

5. The spectroscopic analysis device according to any one of claims 1 to 4, **characterized in that**
the first optical system and the second optical system share a spectrometer,
the first optical system causes the secondary light to be incident on the spectrometer,
the second optical system causes the standard light to be incident on a position different from a position where the secondary light is incident in the spectrometer, and
the spectrometer spectrally separates the incident lights, and causes the spectrally separated lights to be incident on the image sensor.

6. The spectroscopic analysis device according to claim 5, **characterized in that**
the second optical system includes a ring slit located on a path of the standard light before being incident on the spectrometer.

7. The spectroscopic analysis device according to any one of claims 1 to 6, **characterized in that**
the secondary light includes Raman scattered light.

8. A spectroscopic analysis method, **characterized by** comprising:
using an image sensor that has a first region and a second region different from the first region and that detects light incident on the first region and the second region;
causing a secondary light, which is generated from a sample irradiated with a primary light, to be incident on the first region;
causing a standard light to be incident on the second region; and
correcting a detection result of the secondary light incident on the first region, based on a detection result of the standard light incident on the second region.
